# EUROPEAN PATENT APPLICATION

(11) **EP 2 045 096 A1**
(43) Date of publication of application: **08.04.2009**
(21) Application number: 08425625.4
(22) Date of filing: 24.09.2008
(51) Int. Cl.: B44B 5/00, B23C 9/00

(54) **Angular transfer device with multi-wheel support**

(30) Priority: 26.09.2007 IT RM20070498
(71) Applicant: Pavoni, Franco, 00178 Roma (RM) (IT)
(72) Inventor: Pavoni, Franco, 00178 Roma (RM) (IT)
(74) Representative: Santi, Filippo

(57) **Abstract**

The angular transfer device (1) with pivoting support (2) with two or four wheels (3), is a universal accessory for numerically controlled machines having at least four controlled axes, x, y, z, c.

It finds its major use in those processing fields concerning milling and engraving on materials having a flat surface slab, such as slabs of glasses, mirrors, marble, granite, metals and the like.

It allows the execution of millings and engravings in their different finishing stages (raw, satin-finished, semi-polished, polished), with no need of interrupting the processing to change the tool, as opposed to what happens today.

Unlike the angular transfers of the prior art, which have only one wheel, this device is able to house in the same angular transfer even two or four differently grained wheels (3) on a pivoting support (2), each one of which, at the proper time, is operated by a little piston (10) which, causing the pivoting movement of the support (2), causes the wheel to process for the specific finishing stage it has been choosen for.

Thanks to this, it is no longer necessary to change the tool for each finishing stage that is intended to obtain, since the programmed impulse of the piston (10) is sufficient to select immediately the wheel (3) which is already available in the angular transfer (1).

The device subject of this application is also provided with a special tracer point (4) with truncated pyramid gaps in plastic scratch-resistant material, able to execute uniform engravings even on irregular surfaces, ensuring the same depth on the whole engraved length. Depth is adjustable.

## Description

### Technical field

The present invention is an angular transfer device provided with pivoting wheel holding support usable a universal suitable for numerically controlled machines having at least four controlled axes x, y, z, c, for executing straight or shaped millings and engravings, at various finishing stages (raw, satin-finished, semi-polished, polished), as well as artistic, geometric and generally decorative designs on surfaces of glass, mirror, marble, granite, metal and the like.

### Prior art

Since long time, those skilled in the art know numerically controlled machines (work centres or pantographs) for processing on flat surface slabs, such as slabs of glasses, mirrors, marble, granite, metals and the like. In these machines, during the phase of milling and engraving, the slab (or a workpiece in general) leans on a perfectly rectified work base, which operates as a support during processing. In this context, the term "processing" means for example the execution (through a specific program) of engravings at various finishing stages (raw, satin-finished, semi-polished, polished), millings, as well as artistic, geometric and generally decorative designs.

The movements of the axes x, y, z, c are controlled through a special software; and during processing the engraving tool, thas is the wheel, is mounted on an angular transfer device provided with a sole wheel, and it is constantly lubricated by means of water jets directed towards the tool and exiting from nozzles mounted on the processing head together with the tool. In this regard, the device according to the present invention is not different from the traditonal ones. There are many types of tools, such as roughcasting or fine processing and polishing ones, this patent application is not intended to be limited to a particular type.

Each single processing step, from straight or shaped engraving to polishing, passing through the various intermediate steps with various finishing stages (raw, satin-finished, semi-polished, polished), is executed through suitable differently grained wheels.

Each angular transfer device of the prior art can be provided with only one wheel at a time. This entails the need for the work centre of having in the tool store as many angular transfer devices as the number of wheels necessary for each type of processing. The machine executes the change of the tool every time the finishing type needs to be changed. This entails that the process undergoes continuous interruptions, while waiting for the processing head to reach the tool store, to release the angular transfer device provided with the wheel that has been used, to hitch the angular transfer device provided with the needed wheel and to come back to the starting point for continuing processing.

Hence, in order to summarise, since the traditional angular transfer devices allow only one wheel to be mounted, it is necessary to occupy numerous tool spaces in the the tool store, in order to have the availability of differently grained wheels, each one mounted on a single angular transfer device.

In additon, it involves waiting times caused by the need for changing the tool every time the finishing type is to be changed, with a consequent slowdown in processing.

A further problem noticed by the inventor of the present patent application with reference to prior art angular transfer devices is that, in order to workmanlike perform works, these always and exclusively have to be able to work on perfectly rectified work surfaces and on slabs whose surface is absolutely regular.

This is always possible only in the case where machines having a rectified surface are used, which allow the surface rectification of the not to be compromise, limiting to execute just a few kinds of works.

Instead, in the case where one single work centre is intended for making variuos kinds of works, such as cutting, frosting and grinding slabs, etc. (as it often happens in the small workshops where, because of high costs and little space, one single work centre is used for executing many kinds of work), debris and vibrations which are thus produced force the user to continuously rectify the work surface. This task clearly causes additional waiting times which will affect the costs of production.

Instead, as far as slab regularity is concerned, the current angular transfer devices cannot detect and correct any planarity defect.

Therefore, the object of the present invention is to make a universal angular transfer device, being suitable for any work centre with at least four controlled axes (x, y, z, c); that allows all finishing stages to be concluded without having to wait the time needed for the changing the tool; that does not impose availability of a numerous series of angular transfer devices which would reduce the space in the tool store; that allows to workmanlike perform millings and engravings even when the work surface is not rectified or when the slab to be processed has an irregular area.

### Summary of the invention

The present inventions solves the aforementioned specific problems regarding the execution (through a specific program) of engravings at various finishing stages (raw, satin-finished, semi-polished, polished), as well as millings or artistic, geometric and generally decorative designs, without the need for changing the tool for every processing stage.

The above is possible because such device is devised for already housing the wheels needed for any finishing stage, each of which starts working at the proper time, thanks to a pivoting movement driven through a little piston and to the rotation, preferably by 360°, of the whole angular transfer device by means of the fourth controlled "c" axis.

One of the advantages that the device offers in respect to the simple angular transfer device provided with a sole wheel according to the prior art, is that it allows the work centre to continue current processing without interruptions due to the change of the tool.

Moreover, the present invention is provided with special floating tracer points, with truncated pyramid gaps made in plastic scratch-resistant material, conceived for executing uniform millings and engravings even on irregular surfaces, ensuring the same depth on the whole lenght of the milling or engraving. This accessory solves the problems previously shown regarding the need for always having a well-rectifed work base and slabs with regular surfaces. In fact, it is applicable also where there is no rectified work base or a perfectly regular area to engrave.

### Brief description of the drawings

The present invention will be now described in a more specific way, making reference to one of its possible embodiments, not restrictive nor binding, shown in the attached designs, in which:
FIGURE 1 is a side view of the angular transfer device provided with pivoting wheel holding support with two or four wheels and respective tracer points, according to the present invention;

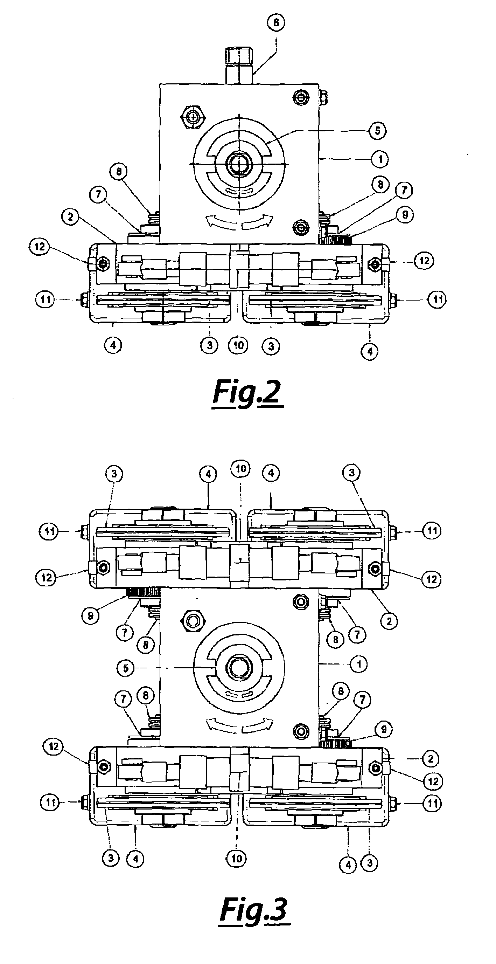

FIGURE 2 is a plan view of the angular transfer device provided with pivoting wheel holding support with two or four wheels of Fig. 1;
FIGURE 3 is a plan view of the angular transfer device with double pivoting wheel holding support with four wheels and respective tracer points of Fig. 1;
FIGURE 4 is a scheme of the wheel position on the pivoting support;
FIGURE 5 is an axonometric view of the angular transfer device with pivoting wheel holding support with two wheels and respective tracer points of Fig. 2;
FIGURE 6 is an axonometric view of the angular transfer device with double pivoting wheel holding support with four wheels and respective tracer points of Fig. 3.

### Description of the preferred embodiments of the invention

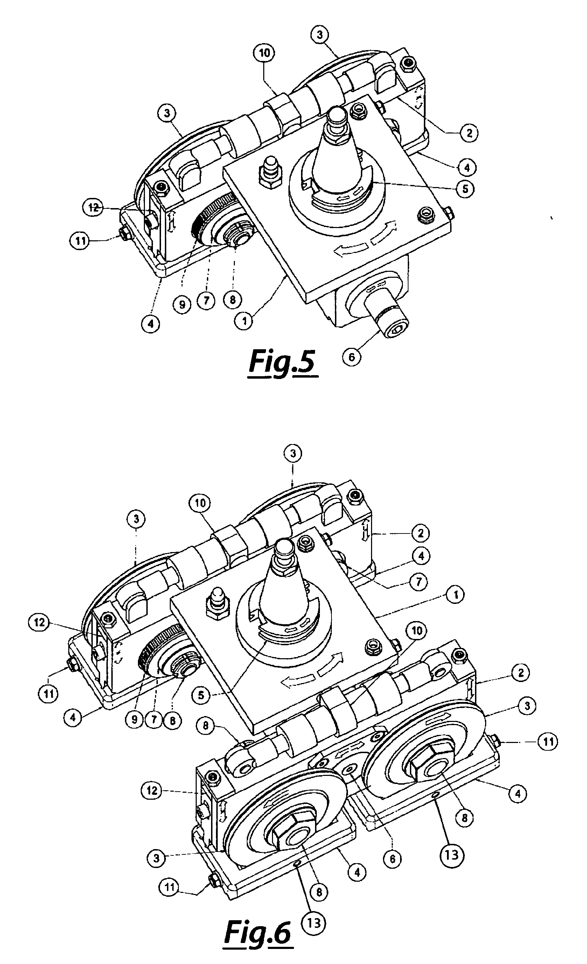

Two preferred embodiments of the present invention are constituted by an angular transfer device with pivoting wheel holding support, respectively with two and four wheels, comprising the following elements, as reported in Figures 5 and 6:
(1) Universal angular transfer device;
(2) Pivoting wheel holding supports;
(3) Wheels (or tools);
(4) Floating tracer points with truncated pyramid contact surface;
(5) Vertical axis for connection and transmission of the motion from the spindle of the numerically controlled pantograph;
(6) Opposite horizontal axes of the angular transfer (receiving the motion from the vertical axis (5));
(7) Toothed pulleys;
(8) Wheel holding axes (mounted on the pivoting support (2));
(9) Toothed belts (transferring the motion from the horizontal axes (6) to the wheel holding axes (8));
(10) Pneumatic pistons;
(11) Nozzles for liquid passage;
(12) Regulating brackets for supporting the floating tracer points (4).

The present invention can be mounted on all the numerically controlled pantographs preferably with at least four controlled axes (x, y, z, c). In particular, the two axes x, y control movements along two orthogonal axes on the work surface, the axis z controls movements in height (ascent and descent), and the fourth axis c controls rotation on the work surface of the device according to the invention. The fourth axis "c" is necessary for the rotation of the present invention, preferably by 360°, clockwise and/or counterclockwise.

The spindle of the numerically controlled pantograph transfers the rotation motion with preferably variable speed to the vertical axis (5) of the device (1) subject matter of the present invention, which transfers it to the the two opposite horizontal axes (6), where the two pivoting wheel holding supports are housed on bearings. By means of toothed pulleys (7) and belts (9), these axes transfer it to the wheel holding axes (8). Other embodiments may provide, instead of toothed pulleys and belts, other types of transmission, e.g. gear drives.

The rotation motion of the wheels (3), which may be for instance diamond-coated or resinoid, is preferably continuous.

Every, preferably adjustable pressure, pneumatic piston (10), one per support (2), constituted by a double shaft with three positions, is fixed on the one side to the body of the angular transfer device (1), and on the other side to the pivoting wheel holding support (2). The piston (10), controlled by a solenoid valve controlled by a dedicated software, operates the pivoting motion of the support (2), which pulls down only one wheel (3) at a time, i.e. the one chosen for executing the kind of desired engraving.

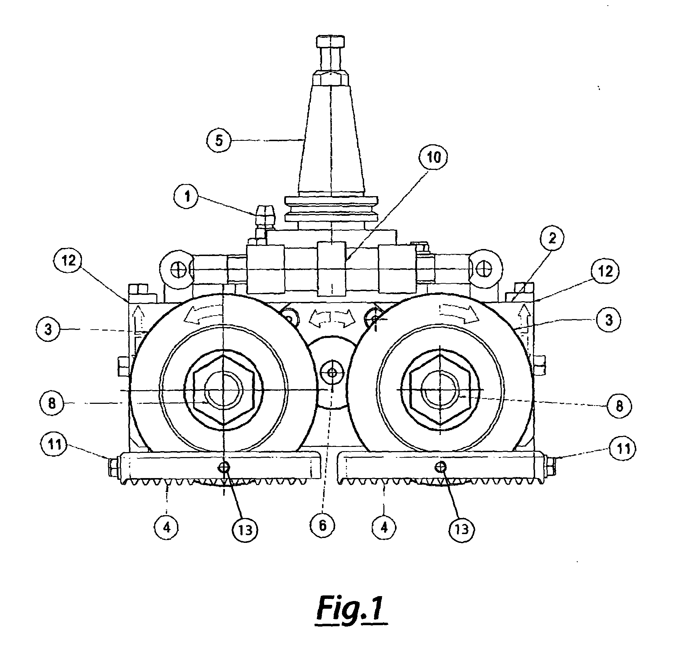

In other embodiments of the device accordino to the invention the pneumatic piston, that in figure 1 is shown in a horizontal position, may be mounted in a vertical position, so that the shaft is perpendicularly oriented with respect to the work plane onto which the wheels 3 operate. In particular, in the case where the support 2 holds a diamond-coated wheel and a polishing wheel, it is advantageous to mount the piston in correspondence with the axis of the polishing wheel.
(image 4: zero position=rest, position one-right=processing, position one-left=processing).

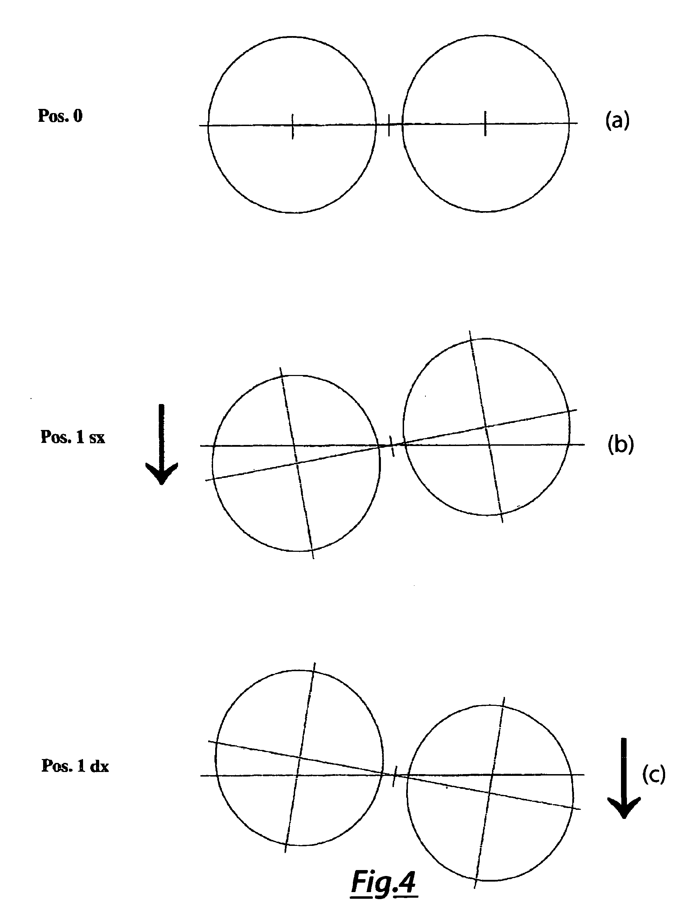

As schematically shown in Figure 4, depending on the position of the shaft of the piston 10, the support 2 may assume three positions: a rest position (Fig. 4a), wherein both the wheels 3 are raised from and not in contact with the material under processing; a first working position, wherein only one wheel (lefthand represented in Fig. 4b) is in contact with the material under processing (while the other wheel is raised from sollevata and not in contact with the latter); and a second working position, wherein instead only the other wheel (righthand represented in Fig. 4c) is in contact with the material under processing.

In the embodiments wherein the device is provided with at least two pivoting supports 2, and consequently with at least two pairs of wheels, it is necessary that the supports 2 the wheel pairs of which are not used stably assume the rest position (shown in Fig. 4a); in such case, the rest position may be preferably maintained through a mobile mechanical beat made, e.g., by a small piston integral with the device that operates a pin capable to be inserted in a corresponding seat with which the pivoting support 2 is provided (e.g. made on the chassis of the same support 2). In this regard, other embodiments of the device according to the invention may comprise even more that two wheel holding supports 2, e.g. four, six or eight.

The tracer points (4), preferably made of plastic scratch-resistant material, each are mounted under each wheel (3) and they are located along an axis that is perpendicular and centred with respect to the latter. In particular, each tracer point 4 floats about a respective pivot 13.

Each tracer point (4) is anchored to the pivoting wheel holding support (2) by means of a bracket (12) with decimal control of adjustment, in order to set the desired depth of engraving. The compressible air in the piston (10), which operates the pivoting wheel holding support (2), compensates any eventual defect of planarity in the work base or in the slab, keeping the milling and engraving depth unaltered and constant.

The contacting surface of the tracer point (4) has a structure comprising gaps, preferably truncated pyramid ones, in order to favour the passage of the lubrication liquid of the wheels (3) by means of nozzles (11) fixed on the same tracer point. The liquid is also a means of draining for the emery resulting from the material removed by the tool during millings and engravings, thus avoiding that any possible debris can interpose between the tracer point (4) and the slab, scratching the latter. Moreover, this structure of the tracer points 4 is such as to reduce the contacting surface between tracer points and surface of the material under processing.

A solenoid valve controlled by a dedicated software opens the passage for the lubrication liquid only for the wheel (3) in position of processing, closing all the other passages automatically.

## Claims

1. Universal angular transfer device (1), in particular for numerically controlled machines having at least four controlled axes (x, y, z, c), the device (1) being coupled to at least one wheel holding support (2), **characterised in that** said at least one support is provided with a respective pair of wheels (3) and is coupled to the device (1) through a respective pneumatic piston (10) activating a pivoting movement of said at least one wheel holding support (2), so that, depending on a position of a shaft of the pneumatic piston (10), said at least one support (2) is capable to assume either a first position, wherein only a first wheel (3) of said pair is in contact with a work surface, or a second position, wherein only one second wheel (3) of said pair is in contact with said work surface.

2. Device (1) according to claim 1, **characterised in that** the pneumatic piston (10) is an adjustable pressure one.

3. Device (1) according to claim 1 or 2, **characterised in that** the pneumatic piston (10) is mounted so that its shaft is oriented perpendicularly to said work surface.

4. Device (1) according to any one of the preceding claims, **characterised in that** said at least one support (2) is capable to further assume a rest position, wherein none of the wheels (3) of said pair is in contact with said work surface, said at least one support being preferably capable to interact with a respective mobile mechanical beat for stably assuming said rest position.

5. Device (1) according to claim 4, **characterised in that** said at least one support (2) is provided with a seat wherein a pin operated by a respective small piston integral with the device (1) is capable to be inserted.

6. Device (1) according to claim 4 or 5, **characterised in that** the number of wheel holding supports (2) to which it is coupled is at least two, preferably two.

7. Device (1) according to any one of the preceding claims, **characterised in that** said at least one support (2) is mounted through bearings on a respective axis (6), which is capable to transmit its own rotation motion, preferably operated by an external spindle, to both the wheels (3) of said pair.

8. Device (1) according to any one of the preceding claims, **characterised in that** said at least one support (2) is further provided, for each wheel (3) of said pair, with a corresponding tracer point (4), preferably made of plastic scratch-resistant material, mounted along an axis that is perpendicular and centred with respect to the corresponding wheel (3), having a contacting surface capable to contact with said work surface.

9. Device (1) according to claim 10, **characterised in that** each tracer point (4) is anchored to the respective wheel holding support (2) by means of a bracket (12) with, preferably decimal, control of adjustment.

10. Device (1) according to claim 8 or 9, **characterised in that** said contacting surface of each tracer point (4) has a structure comprising gaps, preferable truncated pyramid ones, so as to favour a passage of a lubrication liquid of the corresponding wheels (3) by means of nozzles (11) fixed on the same tracer point (4).
